# EUROPEAN PATENT APPLICATION

(11) **EP 1 304 640 A2**
(43) Date of publication of application: **23.04.2003**
(21) Application number: 02257201.0
(22) Date of filing: 17.10.2002
(51) Int. Cl.: G06F 17/60

(54) **System and method for using web based wizards and tools**

(30) Priority: 18.10.2001 US 982942
(71) Applicant: GENERAL ELECTRIC COMPANY, Schenectady, NY 12345 (US)
(72) Inventor: Hammond, Christopher Reynolds, Schenectady, New York 12306 (US); Zingelewicz, Stephen Eric, Niskayuna, New York 12309 (US); Kniffin, Bethany Bleil, Niskayuna, New York 12309 (US); Wadhwa, Alka, Menands, New York 12204 (US); Cheetham, William Estel, Clifton Park, New York 12065 (US); Hammersmith, Robert Alan, Hamilton, Ohio 45011 (US)
(74) Representative: Goode, Ian Roy

(57) **Abstract**

A system and method are proposed wherein knowledge and tools for solving business problems are accessible through a single distribution point. The wizard central (12) system and method allows for developing, approving, revising, searching for and using of web based wizards or tools. After use, the wizards or tools can be stored in a centralized solution repository (24) for later retrieval and analysis. The wizards and tools are categorized based on pre-defined criteria. Searches are thus limited by the categorization and the user is shown only wizards and tools which are applicable to the business problem. The system also provides an approval and revision workflow for the wizards and tools. This workflow provides the capability of revising the wizard or tool knowledge base to keep it current with evolving expert opinion and design documentation.

## Description

The present invention relates to web based wizards or tools and, more particularly, to developing, approving, revising, searching for and using web based software tools.

Business problems are solved on a daily basis. Often, the solution to a problem and the expert knowledge is not captured, and is only accessible through a single "site expert". Expert systems, wizards and other software solutions have been developed to address the issue of distributing this knowledge and expertise across multiple business locations. These software solutions are often built on different platforms and on physically different systems. There is currently no centralized point that one can intelligently search for and use to run these tools. An additional problem is that once the wizard or tool is run, the results are stored in many different databases. There is no centralized location that one can access to gather results and analyze the wizard output data. Finally, as expert knowledge and supporting documentation change, the wizard/expert systems tend to become obsolete and in need of revision. Unfortunately, no systematic method to update these wizards/expert systems or to provide change control and approval of updates is available.

It would be desirable to provide a technique for allowing users to categorize wizards or knowledge-based tools developed in a vast variety of authoring environments, with links to actual wizards, tools and results of wizards or tools that are relevant to specific problems. It would further be desirable to provide such a tool that maintains the knowledge base associated with the software wizards or tools by providing a customized configuration control workflow for the revision process.

According to the invention, a wizard central is proposed wherein knowledge and tools for solving business problems are accessible through a single distribution point. The wizard central is a tool to manage wizards and the contents of wizards, where the wizards can comprise any software tool that uses a knowledge base or business logic to assist a user in solving a business problem. The wizard content can comprise images, text, documents, and other web accessible components. The wizard central system and method allows for developing, approving, revising, searching for and using of web based wizards. After use, the results from a wizard can be stored in a centralized solution repository for later retrieval and analysis. The wizards and tools are categorized based on pre-defined criteria. Searches are thus limited by the categorization and the user is shown only wizards and tools that are applicable to the business problem. The system also provides an approval and revision workflow for wizards. This workflow provides the capability of revising the wizard knowledge base to keep it current with evolving expert opinion and design documentation.

Accordingly, the present invention provides a database for storing information relating to web based wizards. The wizard central database is an environment in which knowledge and tools for solving business problems are accessible through a single distribution point.

An embodiment of the invention will now be described, by way of example, with reference to the accompanying drawings, in which:

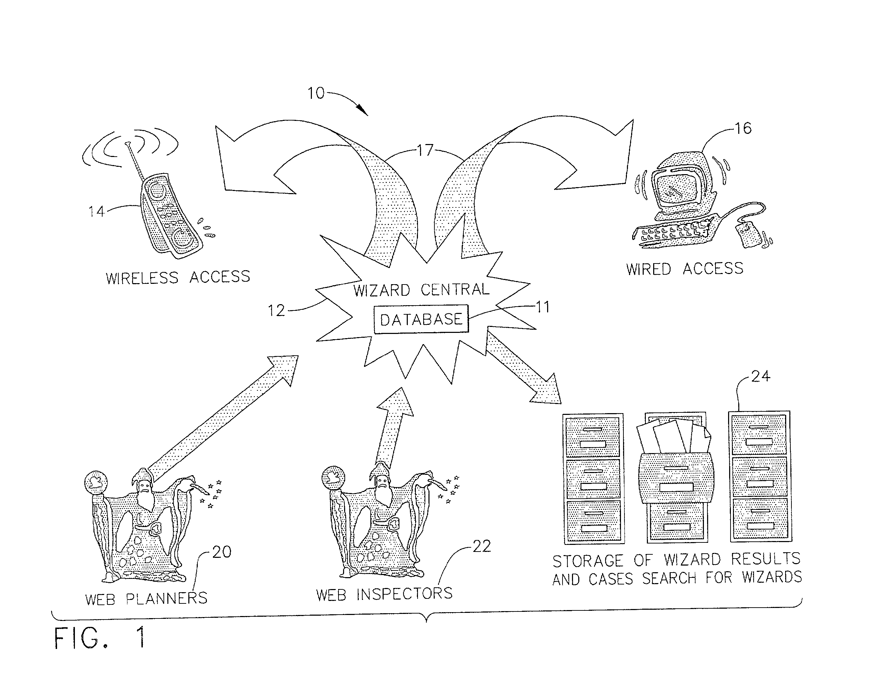

Fig. 1 is a system diagram illustrating the web based wizard workflow according to the present invention.

Tools exist for searching the web and categorizing the search results. These existing search engines produce answers in response to key word and other search techniques, that consist of text document and links to other web pages. The search results can be a hit-or-miss solution, with responses that are often quite unrelated to the intent of the search. The unrelated responses then require refinement of the search request, in the hope of acquiring useful results.

The centralized portal of the present invention allows users to very tightly categorize knowledge-based tools developed in a vast variety of authoring environments. The wizard central optimizes the use of wizards by providing a centralized point from which a user can search for and run the wizards. The wizard central also provides a centralized location that a user can access to gather results and analyze the wizard output data. The wizard central further optimizes use of wizards by providing a centralized point at which the user can update and revise wizards. Revision control for the wizards is permitted, and an approval mechanism for the wizards is provided to ensure accuracy of the wizard and its content. Finally, the results of each wizard run are saved at a centralized location so that the user community can provide subsequent analysis and documentation of results.

This wizard central is a system and method for developing, approving, revising and searching for web based wizards that respond to search queries from a user. The search queries can cover a multitude of subjects for a variety of reasons, such as, for example, allowing the user to solve business related problems using the internet. The wizards found during the search can then be used, and the results can be stored in a centralized solution repository for later retrieval and analysis.

Many web wizards are deployed across multiple internal and external web sites. These applications provide considerable complications to the web sites in that customers and employees would use the web wizard tools on a regular basis to get direction when solving a problem or performing a task. These tools are developed with multiple wizard authoring applications across many different disciplines. The wizard central of the present invention is an umbrella application that allows experts to store their tools in a categorized manner. The tools are categorized based on pre-defined criteria, thus limiting the search by the categorization methodology to purely relevant results. Hence, the user is shown only tools that are applicable to the search subject.

Referring to Fig. 1, there is a system diagram illustrating an application 10 that uses an associated database 11 for developing, approving, revising and searching for web based wizards. In the application 10, a wizard central 12 is a single web portal access point that allows users to access an environment in which knowledge and tools for responding to search queries are accessible. The search queries can be received at wizard central via any suitable means, including wireless access at 14 or wired access at 16. The system 10 comprises one or more access means 14, 16, that are representative of separate users in the system. System 10 is configured to provide an online interface (website) whereby customers, employees and other users can input search queries, and obtain a wealth of online information. It will be obvious to those skilled in the art that the wizard central concept of the present invention can be applied to a multitude of engineering, manufacturing, compliance, and other individual or combined disciplines without departing from the scope of the invention.

The system 10 comprises a network interconnecting a server associated with wizard central 12, and a plurality of users accessing wizard central via access means 14, 16. In one embodiment, the access means comprise wired access, such as computers having a web browser. Alternatively, the access means can be wireless access, such as mobile PDA or wireless laptop means. The server is accessible to wired and wireless users via the Internet or an intranet. The server can be configured to store and download text and digital images. The server is comprised of hardware and software that allows the user to access the wizards that are managed on the website. The wizard central concept of the present invention is implemented by the software/hardware combination communicating with a centralized database.

The users are interconnected to the Internet through any suitable interface such as dial-in-connections, cable modems, Internet access, special highspeed ISDN lines and networks such as local area networks (LANs) or wide area networks (WANs). Alternatively, the users can be any client system capable of interconnecting to the Internet including a web-based phone or other web-based connectable equipment.

The information accessible by wizard central can be received from multiple sources, including but not limited to expert sources such as web planners 20 and web inspectors 22. The experts can store their tools in a categorized manner that will allow users at 14 and 16 to be shown only tools that are applicable to the search query. The user, then, can access tools developed in a vast variety of authoring environments.

The wizard central concept uses the database to categorize wizards, store wizard results, and track changes to wizards. A database can be used to track wizard creation. When a new wizard or tool is uploaded, records are created in the database to track creation and revision of the wizard. A database can also be used to approve wizard creation. Wizards are approved by tagging them as approved in the database. Once all reviewers have tested and verified that a wizard is correct, that particular version of a wizard is approved. Finally, wizards can be revised by a wizard developer and resubmitted for approval. All of this can be tracked in the database.

Wizard central provides secure and categorized access to wizards and tools. When a new user is added to the wizard central system, the user is granted access to each category on a case-by-case basis. Access is determined by role. For example, the user role has use-only access to the wizards and tools in a category. The developer role has the additional capability of developing and adding new wizards or tools to a category. The administration or reviewer/approver role has the additional capability of approving development wizards and tools for a category. Wizards and tools are placed into categories by developers and approvers that have access to those categories. Once a wizard or tool is approved for a category, the users for that category have access to those approved wizards and tools.

Wizard central 12 produces responses that are linked to these actual wizards or tools and results of wizards or tools that are relevant to the specific query. The databases can track customer access and privileges, save customer preferences, and save customer lists of frequently used wizards, tools and links. The wizard central can also store uploaded wizards, store links to other related documents and tools, and store metadata associated with the uploaded wizards or tools and documents. Results generated by running the wizards or tools can be stored, and use cases generated by running the wizards or tools can be stored. Wizard results and cases, for storage and for search, can be at data storage and retrieval means 24.

The structure of the system 10 allows for each user to interface with the server, conveying a search query to the central database, or wizard central, 12, through an input means 14 or 16. The input means can comprise manual or automatic input means, including an input wizard. The interface includes an input portion and an output portion. The input portion of the interface is used to convey information from the user to the server and the portal interface 12. Typically, the input information is generated by the user's actuation of an input peripheral, such as a mouse, a keyboard, or a key pad. The output portion conveys information from the server to the user computer or other input means, and is typically displayed on the monitor of the user's computer or on a key pad associated with the wireless access input means. However, the output portion is capable of being displayed on other output peripherals, like printers.

The server is configured with the portal interface 12, and further configured with a user interface 17 for allowing a user to input information into database 24 for upload to the server. The interface 17 can be provided by any suitable means, such as by web pages that can be transmitted from the database to the user. The input information can include query related to the database of information. The user can also download information from the portal interface 12. The input means filters information between the user and the server. The connection means or user interface 17 connects the computer 16 or input means of each user to the server.

In a preferred embodiment, the server is configured to host a plurality of web pages that allow users and customers to enter business related problems or queries for upload to the server via the input wizard. The input wizard ensures consistent and relevant data is input to the server and the portal interface 12 from each user location. This is accomplished through use of a series of data fields requiring input information on the disciplines of interest. The users benefit from the expanded sources for data and by being directed to the correct knowledge and tools to answer their queries. The wizard central reduces the potential for redundant wizards or tool development, and promotes use of wizards or tools that have been developed. Also, the wizard central provides capability for capturing customer and user interaction, lessons learned, and leading indicators of design problems based on the queries relating to particular products.

Continuing with Fig. 1, the system 10 can comprise any kind of digital communication network or combination of digital communication networks. For example, the network can include a web browser, local area network (LAN), wide area network (WAN), World Wide Web, or any combination of these networks. Likewise, the user inputs 14 and 16, and the server can be of any form so long as the web based wizard information can be communicated between a user and the portal interface 12.

The server is configured with databases and applications that allow users and customers to access and store information regarding user queries, and other knowledge. The system 10 provides a workflow to maintain the knowledge base. For example, developers or experts can be allowed to review a wizard for updates, and change the wizard to conform to current expert opinion. The wizard can be uploaded to the wizard central, then submitted for approval to reviewers. A customized configuration control workflow can also be provided for the wizard revision process, in that the wizard central site allows experts to review, revise and submit changes for approval.

Although the configuration described herein refers to a server being geographically and physically separated from each user link, this does not preclude integrating the website data and information into each of the user sites to create a stand-alone system. In such a case, it is feasible to use a network to update the information resident in each of the computers or other input devices. It is also feasible to download website information and data to the user computer each time information is to be input.

For completeness, various aspects of the invention are set out in the following numbered clauses:
1. A system configured for uploading web based information, comprising: an application (10) configured with a database (11) of web related information data, said application (10) capable of allowing a user to input information into the database (11) for upload to a server and allowing a user to download information from the database (11);
   at least one wired (16) or wireless (14) access means for the user;
   an input means (12) for filtering information between the user and the server; and
   an interface (17) between the at least one wired or wireless access means (16, 14) and the server.

2. A system as claimed in clause 1 wherein the web related information data comprises categorized knowledge-based tools or wizards relevant to specific business issues and related documents.
3. A system as claimed in clause 1 wherein the input means (12) comprises a wizard central.
4. A system as claimed in clause 3 wherein the wizard central (12) allows for developing, approving, revising, searching for and using web based wizards or tools.
5. A system as claimed in clause 4 further comprising a centralized solution repository (24) for storing results of said web based wizards or tools for later retrieval and analysis.
6. A system as claimed in clause 4 wherein the web based wizards or tools are accessible through a single distribution point.
7. A system as claimed in clause 1 wherein the server is comprised of hardware and software that allows said user to access relevant wizards or tools in response to input from said user.
8. A system as claimed in clause 1 wherein said server is configured to store and download text and digital images.
9. A workflow system configured for allowing web based knowledge to be maintained, comprising:
   an application (10) configured with a database (11) of web related knowledge data, said application (10) capable of allowing a user to input information into the database (11) for upload to a server and allowing a user to download web related knowledge from the database (11);
   at least one wired (16) or wireless (14) access means for the user;
   an input means (12) for filtering information between the user and the server; and
   an interface (17) between the at least one wired or wireless access means (16, 14) and the server.
10. A workflow system as claimed in clause 9 wherein the web related knowledge data comprises categorized knowledge-based tools relevant to specific business issues and related documentation.
11. A workflow system as claimed in clause 9 wherein the application allows for developing, approving, revising, searching for and using web based wizards or tools.
12. A workflow system as claimed in clause 11 further comprising a centralized solution repository (24) for storing results of said web based wizards or tools for later retrieval and analysis.
13. A workflow system as claimed in clause 11 further comprising means for providing an approval process for said web based wizards or tools.
14. A workflow system as claimed in clause 11 further comprising means for providing revision control of said web based wizards or tools.
15. A workflow system as claimed in clause 11 wherein the web based wizards or tools are accessible through a single distribution point.
16. A method for accessing and uploading web based information for internal users and external users using a system which includes a server and at least one client system, the method comprising the steps of:
   uploading user information and user selections to the server;
   downloading from the server, web pages configured to direct internal and external users to a database and related applications within the server, the database configured with categorized wizards or knowledge-based tools and related documentation, responsive to the user information; and
   using an input means (12) to filter information between the user and the server.
17. A method as claimed in clause 16 wherein the web based information comprises categorized wizards or knowledge-based tools relevant to specific business issues.
18. A method as claimed in clause 16 further comprising the step of configuring the server to store and download wizards or tools and associated documentation, including text and digital images.
19. A method as claimed in clause 16 wherein the step of downloading from the server, web pages configured to direct internal and external users to a database and related applications within the server, further comprises the step of downloading from the server, web pages configured to direct internal and external users to actual wizards or tools and results of wizards or tools relevant to a specific problem input by said user.
20. A method as claimed in clause 16 further comprising the step of maintaining the web based information.

## Claims

1. A system configured for uploading web based information, comprising:
an application (10) configured with a database (11) of web related information data, said application (10) capable of allowing a user to input information into the database (11) for upload to a server and allowing a user to download information from the database (11);
at least one wired (16) or wireless (14) access means for the user;
an input means (12) for filtering information between the user and the server; and
an interface (17) between the at least one wired or wireless access means (16, 14) and the server.

2. A system as claimed in claim 1 wherein the web related information data comprises categorized knowledge-based tools or wizards relevant to specific business issues and related documents.

3. A system as claimed in claim 1 wherein the input means (12) comprises a wizard central.

4. A system as claimed in claim 1 wherein the server is comprised of hardware and software that allows said user to access relevant wizards or tools in response to input from said user.

5. A system as claimed in claim 1 wherein said server is configured to store and download text and digital images.

6. A workflow system configured for allowing web based knowledge to be maintained, comprising:
an application (10) configured with a database (11) of web related knowledge data, said application (10) capable of allowing a user to input information into the database (11) for upload to a server and allowing a user to download web related knowledge from the database (11);
at least one wired (16) or wireless (14) access means for the user;
an input means (12) for filtering information between the user and the server; and
an interface (17) between the at least one wired or wireless access means (16, 14) and the server.

7. A workflow system as claimed in claim 6 wherein the web related knowledge data comprises categorized knowledge-based tools relevant to specific business issues and related documentation.

8. A workflow system as claimed in claim 6 wherein the application allows for developing, approving, revising, searching for and using web based wizards or tools.

9. A method for accessing and uploading web based information for internal users and external users using a system which includes a server and at least one client system, the method comprising the steps of:
uploading user information and user selections to the server;
downloading from the server, web pages configured to direct internal and external users to a database and related applications within the server, the database configured with categorized wizards or knowledge-based tools and related documentation, responsive to the user information; and
using an input means (12) to filter information between the user and the server.

10. A method as claimed in claim 9 wherein the step of downloading from the server, web pages configured to direct internal and external users to a database and related applications within the server, further comprises the step of downloading from the server, web pages configured to direct internal and external users to actual wizards or tools and results of wizards or tools relevant to a specific problem input by said user.
